# EUROPEAN PATENT APPLICATION

(11) **EP 0 607 760 A2**
(43) Date of publication of application: **27.07.1994**
(21) Application number: 93830333.6
(22) Date of filing: 28.07.1993
(51) Int. Cl.: C02F 1/64, C02F 1/52, C02F 1/66, C02F 1/28

(54) **Method and plant for the treatment of water used in washing filters and the like**

(30) Priority: 19.01.1993 IT FI930006
(71) Applicant: Iacomelli, Marcello, I-51010 Margine Coperta, Massa E Cozzile (Pistoia) (IT)
(72) Inventor: Iacomelli, Marcello, I-51010 Margine Coperta, Massa E Cozzile (Pistoia) (IT)
(74) Representative: Mannucci, Gianfranco, Dott.-Ing.

(57) **Abstract**

The plant comprises: a collecting tank (12) for filter-washing water; a settling station (16) for water from said tank, to concentrate the sludges and remove purified water; a pump (27) for a slow removal of the water from said tank (12); means (20, 22) for the controlled addition of chemical products to the water to be settled; and a filtering complex (18) for retaining in filter bags or wrappings (38) the sludges, separating them from residual recyclable water.

## Description

The object of the invention is to solve, in particular, the problem of how to treat the discharges of filtration plant situated in areas where there is no public sewage system, or to pretreat them to avoid exceeding the limits set by local authority regulations. The problem here is due to the sudden discharge of iron and manganese or turbidity retained by filtration plant, during the daily washing of the filters. These and other objects and advantages of the invention will be made clear by the following text.

Basically, according to the method of the invention - for the treatment of water in general, and in particular of water produced by the washing processes of filtration plant in general and particularly plant where iron and manganese are removed - the water obtained from successive washings is collected, treated in a slow cycle by means of chemical products having at least flocculating and pH-modifying properties, and settled out in order to separate the sludges from the purified water, which will then be discharged or returned for filtering. The thickened and fluid sludges are retained by filtration and compaction, while the water percolates in small amounts and is collected with the water that is to be retained and is recycled with it. In practice the chemical products are added during the transfer to the settling phase.

According to the invention, a plant for carrying out the above method basically comprises the following components in combination:
- collecting tank for filter-washing water;
- settling station for water from the abovementioned collecting tank, to concentrate the sludges and remove purified water;
- means for a slow transfer of the water from said tank to the settling station;
- means for the controlled addition of chemical products in order to condition the water to be treated; and
- a filtering and compacting complex for retaining the sludges, separating them from residual recyclable water.

The settling station in practice comprises: a container whose bottom tapers in the manner of a conical hopper or the like; a column inside said container which receives the water to be purified and the added chemical products; and a system for intermittently tapping the bottom of said container in order to send the thickened sludges to the filtering complex. Said tapping system may work by gravity with a time-controlled solenoid valve, or by tapping with an intermittent pump, so as in either case to provide brief periods of tapping separated by long periods of rest. This process is possible with an electronic control signal produced by a specific device.

An aerating and oxygenating apparatus can be used furthermore to improve the mixing of the waters and added chemical products, which mixing is facilitated and completed by said air-oxygenating apparatus.

The filtering complex advantageously comprises means for using disposable bag filters which thus themselves serve as containers of the dewatered sludges to be disposed of in a waste site.

The filtering complex may include a tank for recovering the percolate, and means for recycling said percolate in order to return it to the filter-washing water collecting tank for recycling with that water.

The water purified in the settling station may be separated by an overflow - having a Thomson or similar profile - and be disposed of or recycled with the raw water arriving for filtering.

A clearer understanding of the invention will be obtained from the description and accompanying drawing, which latter shows a practical non-restrictive illustrative embodiment of the invention. In the drawing:

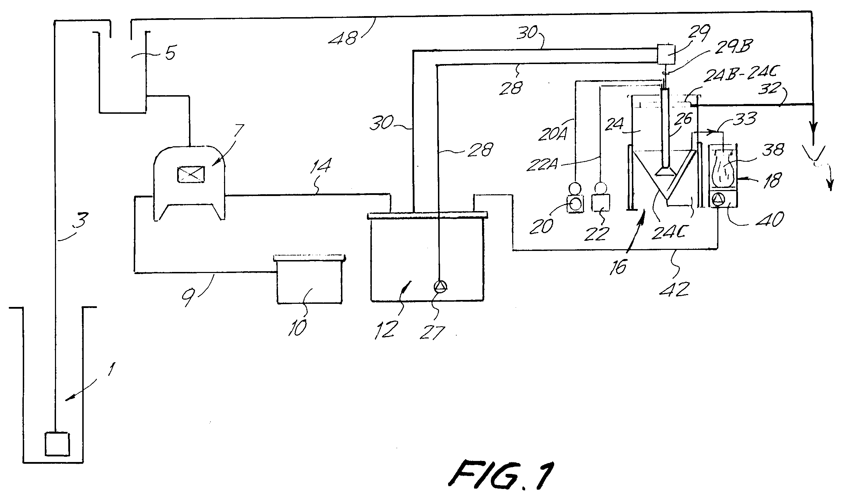

Fig. 1 is an outline sketch of the plant;
Fig. 2 shows an enlarged detail of the sludge settling and concentrating station;

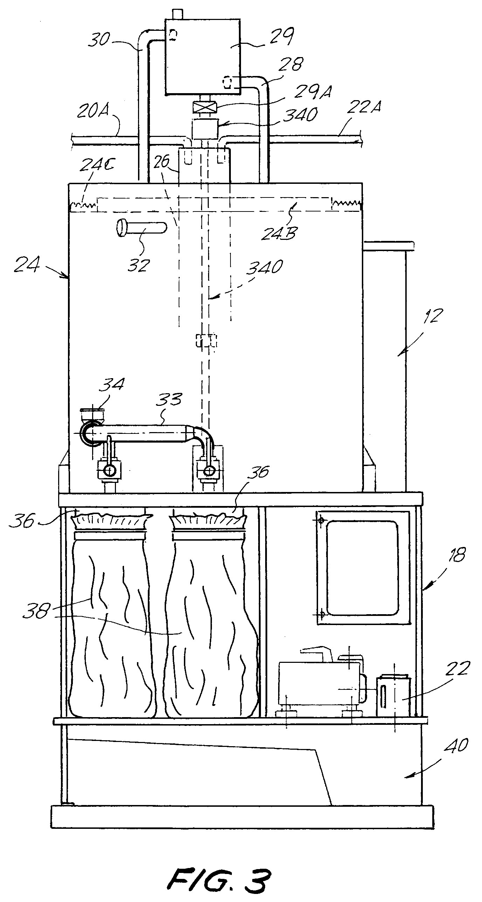

- Fig. 3 shows an elevation and partial section taken from the line III-III indicated in Fig. 2;
- Fig. 4 is a schematic in a horizontal section taken through the line IV-IV indicated in Fig. 2;
- Fig. 5 shows a local section taken through the line V-V indicated in Fig. 4;
- Fig. 6 is a local sectional view taken through the line VI-VI indicated in Fig. 5.

In the accompanying drawing, 1 diagrammatically symbolizes a well or other source of water to be treated by filtration before being fed into the water mains system or the like; by a pumping circuit 3, the water from the well or source 1 is fed to an optional treatment tank 5 for chlorination or other chemicophysical treatment before filtration. 7 is a schematic representation of a filtration system for producing water suitable for distribution via a circuit 9 or other user system, which may feed, for example, a tank 10 for the distribution utilities. The filters of the system 7 must be periodically washed, for example every 24 hours or after any appropriate period of time suitable for the type of water being filtered. The water which has been used to wash the filters must be stored in a suitable collecting tank 12. This washing water, produced rapidly and intermittently, must be collected and treated in such a way as to facilitate the disposal of the polluting substances retained by the filters, which substances are a special kind of waste that is unacceptable in conventional disposal systems. 14 indicates a circuit for tapping the filter-washing water from the system 7; a suitable difference in level, or a pump, enables the water with which the filters have been washed to be rapidly collected in the tank 12 during washing operations. This water can therefore then be treated over a relatively long period of time, though not longer than the interval between one washing and the next. In short, the tank 12 acts as a buffer.

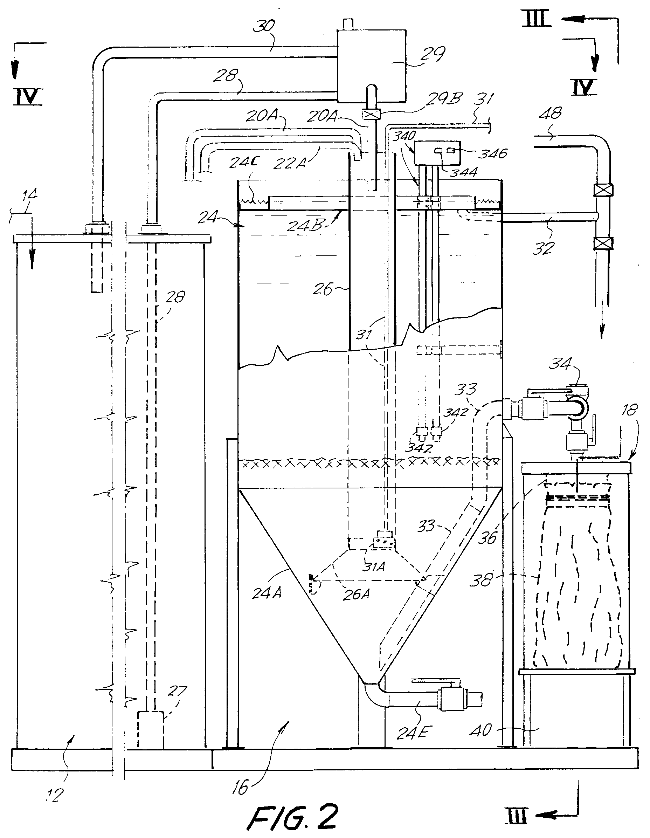

The tank 12 is followed by a settling station 16 in which the sludges are concentrated and the purified water is taken away for clarification and flocculation. Figs. 2 and following show certain details of the sludge settling and concentrating station. Said station 16 is provided with a filtration complex 18 for the separation of the sludges, which are retained, and of residual water, which is recyclable. Also connected to said settling station are means comprising pumps 20-22 for the controlled addition of chemical products for conditioning the water. The complex 18 may use filter bags or a filter press or equivalent means.

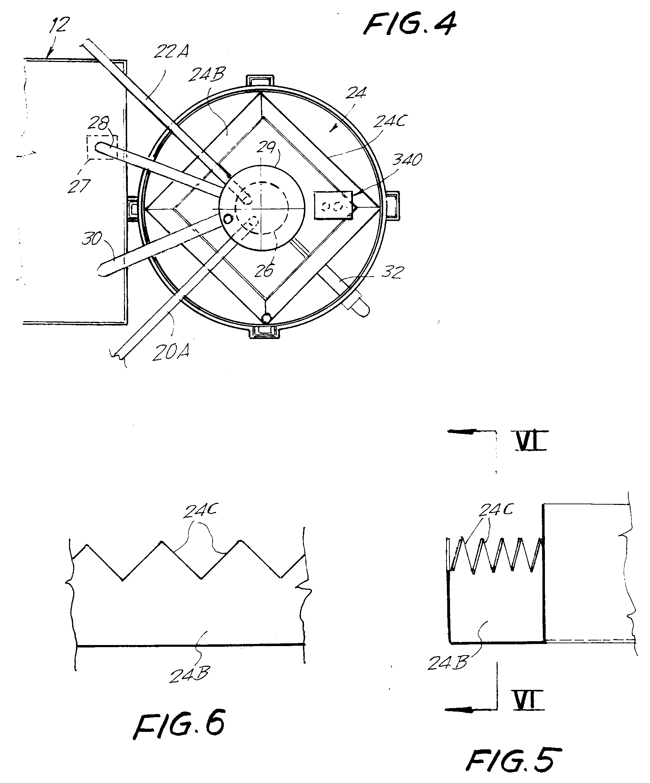

With reference also to Figs. 2 and following, the settling station 16 comprises a container 24 whose bottom 24A tapers, in the manner of a conical hopper or the like, in which the sludges are concentrated by settling. Centrally inside the container 2424A is a vertical column 26 into which the water from the collecting tank 12 is introduced at a flow rate predetermined partly by a predetermined hydraulic head. More particularly, a pump 27 submerged in the tank 12 passes the water to be settled up a pipe 28 to a diffusion chamber 29 where the hydraulic head is created by which the column 26 is fed, while any excess water pumped by the pump 27 returns to the tank 112 via a return pipe 30 by overflow. From the diffusion chamber 29 the desired outflow is discharged to the column 26 through a pipe 29A with a flow regulator 29B, which works with said constant head. The pump 27 is thus able to provide a slow flow of water for settling, in conformity with the period available between two successive washings of the filters. Also introduced into the column 26 are the chemical products for the conditioning of the washing water, arriving along the pipes 20A and 22A from the pumps 20 and 22 for the controlled delivery of the modifying chemical products, specifically flocculants and pH modifiers. An instrument 31 is mounted at the bottom of the column 26 to blow in air from the bottom end 31A of said instrument. The downward flow inside the column 26 is quite slow and the mixture of air and modifiers is well homogenized inside the column 26 owing to the blowing in of air, which also oxygenates the mixture. An even slower flow back upwards from the flared mouth 26A at the bottom of the column 26 occurs inside the container 24, 24A, resulting in an efficient and complete settling out of the sludges and of any other products to be separated out from the water. The water can then either be discharged into the drains for natural disposal, or be recycled to the treatment tank 5 via a pipe 48. The water purified in the settling station 16 (and especially in the container 24, 24A) is recovered by an overflow 24B shaped with a Thomson profile as shown in detail in Figs. 4 to 6, where the channel 24B has a square shape and is positioned at the top of the container 24; the outer peripheral walls of this overflow are saw-toothed at the top as indicated by 24C in order to provide a slow, steady flow of water which is discharged slowly from the overflow 24B and taken off by a pipe 32 to a drain, or once again to the treatment tank 5 for recycling through the filters 7. The settled sludges in the bottom of the container 24, 24A (which may be equipped with an emptying system 24E or equivalent) are removed by gravity - or by some other means - through a pipe 33 which leads to the filtering complex 18 under the control of a solenoid valve 34, which is timed by a timer, to ensure an intermittent discharge of sludges containing a certain amount of water. Discharging takes place automatically under the control of an electronic system 340 positioned in the container 24, 24A. This system 340 comprises a generally optoelectronic turbidity sensor 342 with a horizontal path between the light source and a photoresistor-based detector, or other equivalent sensor for assessing turbidity and hence for detecting when the settled sludges have built up to the level of the sensor. The electronic system also comprises suitable timers for controlling the discharging (by means of the solenoid valve 34 or equivalent means); a first timer indicated at 344 may set a delay - for example of the order of 2 hours - for sludge discharging to commence after the signal is received from the sensor 342; a second timer indicated at 346 sets the duration of discharge of sludges from the pipe 33, for example of the order of 10 seconds. The timer 344 is reset if, during counting, a further signal is received from the sensor 342; this is in order to prevent the discharge in the event of a hitch. It will be necessary to determine the intermittent discharge on the basis of the average output of sludge. As a safety measure, two instruments may be provided in parallel, optionally at different levels.

The sludges flow out through the pipe 33 and the valve 34 into the filtering station 18 for a comparatively slow filtering operation. The filtering station 18 comprises two or more inlets 36 for filter bags 38, which are generally disposable and themselves act as the containers for the removal in the special discharges of the retained sludges; the sludges are concentrated and high dewatered. After percolating through the filter bags 38, the water is recovered in a percolate tank 40, from which, via a circuit 42, said water is reintroduced into the tank 12 and recycled through the settling station 16 and filtering complex 18.

The filter bags 38 may be fed simultaneously in each discharge cycle, or alternatively a distributing system may be provided to feed the different filter bags 38 in succession, so that the different bags can be replaced in succession without interrupting the running of the plant.

The filter bag system of filtering (in which the filter bags are also containers for discharging purposes) may be replaced by a filter press with corresponding accessories or by some other equivalent system of filtration and compaction.

The method and plant described above satisfy the need for the treatment of the discharges of filtration plant in general, including plant for producing drinking water, in areas not served by public sewage systems or otherwise for pretreatment in cases where the sludges do not come within the limits set by local authority regulations. In particular, the method and the plant solve the problem of the sudden discharge of iron and manganese or of turbidity, which are retained by the filters and discharged rapidly during the daily washing of the filters. The water used to wash the filters is stored in the tank 12: over a period which may even be the whole of the time between one washing and the next of the filters of the station 7, the water is tapped from the tank 12 for the slow and efficient settling treatment. The washing water entering the settling station 16 is treated with the chemical products referred to above so as to ensure precipitation and thickening, especially of iron and manganese hydroxides present in the washing water and/or for the turbidity that must be retained. The treated water coming from the overflow 24B conforms perfectly in practice with the requirements of present standards and can therefore be sent to a discharge (optionally controlled for periodic inspections) and then released into open drains or reintroduced into the circuit of water undergoing filtration, e.g. via a pipe 48 leading to the treatment tank 5. The sludges that collect in the bottom of the container 24, 24A are sent - by gravity and very slowly, and under the control of the time-controlled solenoid valve 34 or other equivalent system - into the bag filters 38 with a sufficient average flow and with an intermittency such as to ensure the regularity of the flow but avoid compaction of the sludges in the circuit and clogging up of the drains; this is the purpose of the control system of the solenoid valve 34, which provides an automatic system of timed discharges, in which it is possible to adjust both the working period and the rest period, as indicated earlier.

The method and the plant can also be used for other purposes.

Means may be provided for avoiding interruptions or damage due to freezing, at least in the filtration 18 and control system. As an alternative to the solenoid valve 34, a pump system may be provided, controlled in the same way, to bring about a periodic transfer of the sludges into the bag filters 38.

## Claims

1. Method for the treatment of water in general and in particular of water used in washing filters, for filtration plant in general and particularly plant where iron and manganese are removed, characterized in that the water obtained from successive washings is collected, treated in a slow cycle by means of chemical products having at least flocculating and pH-modifying properties, and settled out with separation of on the one hand the purified water, which will then be discharged or returned for filtering, and on the other hand the thickened and fluid sludges, which are retained by filtration and compaction, while the water percolates in small amounts and is recycled with the washing water in a subsequent treatment cycle.

2. Method according to Claim 1, characterized in that the chemical products are added during the transfer to the settling phase.

3. Plant for carrying out the method of at least Claim 1, characterized in that it comprises in combination: a collecting tank (12) for filter-washing water; a settling station (16) for water from said collecting tank (12), to concentrate the sludges and remove purified water; means (27, 28, 29, 29B) for a slow and controlled transfer of the water from said tank (12) to the settling station (16); means (20, 22) for the controlled addition of chemical products in order to condition the water to be treated; and a filtering and compacting complex (18) for retaining the sludges, separating them from residual recyclable water.

4. Plant according to Claim 3, characterized in that the settling station (16) comprises: a container (24) whose bottom (24A) tapers in the manner of a conical hopper or the like; a column (26) inside said container (24) which receives the water to be purified and the added chemical products; and a system (33, 34) for intermittently tapping the sludges from the bottom (24A) of said container (24) in order to send the thickened sludges to the filtering complex (18).

5. Plant according to Claim 3 or 4, characterized in that said tapping system (33, 34) works by gravity and includes a time-controlled solenoid valve (34).

6. Plant according to Claim 3 or 4, characterized in that said tapping system includes an intermittently operating pump.

7. Plant according to one of Claims 3 to 5, characterized in that the filtering and compacting complex (18) comprises means for using disposable bag filters (38) which serve as containers of the sludges to be disposed of in a waste site.

8. Plant according to at least Claim 3, characterized in that the filtering complex (18) includes a tank for recovering the percolate (40) and means (42) for recycling said percolate to, in particular, the tank (12) in which the filter-washing water is collected.

9. Plant according to at least Claims 3 and 4, characterized in that the water purified in the settling station (16) is separated by an overflow (24B, 24C) - having a Thomson or similar profile - from the container (24) to be disposed of or recycled with the water arriving for filtering in the plant.

10. Plant according to at least Claim 3, characterized in that controlled addition means (20, 22) feed modifying substances to the settling station (16).

11. Plant according to Claim 4 or 5 or 6, characterized in that it comprises - for the control of the intermittent tapping of the sludges - an electronic system (340) with at least one turbidity sensor (342), a timer (344) for delaying the commencement of the intermittent tapping after the signal is received from said sensor (342), which timer is resettable on each signal, and a second timer (346) for obtaining brief and repeated periods of intermittent tapping until a signal indicating the end of turbidity is received from said sensor (342).

12. Plant according to Claim 3 or 4, characterized in that it comprises a diffusion chamber (29) which is connected to said column (26), is fed by said pump means (27, 28) for tapping said collecting tank (12), and is provided with a return pipe (30) for returning any excess to said collecting tank (12), so as to establish a constant hydraulic head for the outflow regulator (29B).

13. Plant according to Claim 3 or 4, characterized in that it comprises an instrument (31, 31A) for blowing gas - in particular air - into said column (26) so that the modifying products and the water to be settled are mixed, and so that the mixture is oxygenated.
